# EUROPEAN PATENT APPLICATION

(11) **EP 3 696 648 A1**
(43) Date of publication of application: **19.08.2020**
(21) Application number: 18865693.8
(22) Date of filing: 28.09.2018
(51) Int. Cl.: G06F 3/01, G09B 5/06, B25J 11/00

(54) **INTERACTION METHOD AND DEVICE**

(30) Priority: 09.10.2017 CN 201710929662
(71) Applicant: Alibaba Group Holding Limited, Grand Cayman (KY)
(72) Inventor: JIA, Zijun, Hangzhou Zhejiang 311121 (CN)
(74) Representative: Boult Wade Tennant LLP
(86) International application number: PCT/CN2018/108308
(87) International publication number: WO 2019/072104

(57) **Abstract**

Embodiments of the disclosure provide a robotic interaction method and device. The method includes: playing live streaming content selected by a user; obtaining emotion information of the user when the user is watching the live streaming content; sending the emotion information to a host corresponding to the live streaming content; and playing interactive content corresponding to the emotion information sent by the host. For example, when it is found that the user expresses an emotion of boredom, the live streaming content is adjusted to sing a song, do a dance, or play a game. Through this solution, live streaming content is provided to a user by live streaming, and an emotion of the user when the user is watching the live streaming content is perceived to interact with the user, to combine a live streaming technology with a perception technology, and according to the emotion of the user while watching the content, adjust the content watched by the user without delay, thereby achieving effective interaction between a content provider and a content viewer.

## Description

### CROSS-REFERENCE TO RELATED APPLICATIONS

The present application claims priority to and is the national stage entry of Int'l. Appl. No. PCT/CN2018/108308 filed Sep. 28, 2018 which claims priority to Chinese Patent Application No. 201710929662.0, filed on October 9, 2017, both of which are incorporated herein by reference in its entirety.

### BACKGROUND

### Technical Field

The disclosure relates to the field of artificial intelligence, and in particular, methods and devices for interacting with robotic devices.

### Description of the Related Art

In recent years, with the development of robotics and the deepening of artificial intelligence research, intelligent mobile robots have played an increasingly important role in human life and have been widely utilized in many areas. For example, robots customized for children are used for childhood education and entertainment.

Using a child's robot as an example, one use of robotics includes the use of the robot to learn English words. Currently, the child user may send an instruction to the robot (e.g., saying the phrase "learn English words") to obtain a content resource for the robot. This instruction triggers the robot to obtain a corresponding pre-generated audio and video content resource from a server for playing and display, where the content is obtained in a single form. Moreover, throughout the playing, the child user generally can perform simple playing control operations (e.g., "start," "pause," "fast forward," "fast reverse," "previous," and "next"). As a whole, the child user passively receives content and has poor user experience due to a lack of richer interactive functions.

### SUMMARY

Given this issue, embodiments of the disclosure provide an interaction method and device for achieving personalized robot interaction for a new user.

In a first aspect, an embodiment of the disclosure provides an interaction method, applied to a robot, the method comprising: playing live streaming content selected by a user; obtaining emotion information of the user when the user is watching the live streaming content; sending the emotion information to a host corresponding to the live streaming content; and playing interactive content corresponding to the emotion information sent by the host.

In a second aspect, an embodiment of the disclosure provides an interaction apparatus, applied to a robot, the apparatus comprising: a playing module, configured to play live streaming content selected by a user; an obtaining module, configured to obtain emotion information of the user when the user is watching the live streaming content; and a sending module, configured to send the emotion information to a host corresponding to the live streaming content, wherein the playing module is further configured to play interactive content corresponding to the emotion information sent by the host.

In a third aspect, an embodiment of the disclosure provides an electronic device, and the electronic device may be implemented as comprising a processor and a memory, wherein the memory is configured to store a program supporting execution of the interaction method in the aforementioned first aspect, and the processor is configured to execute the program stored in the memory. The electronic device may further comprise a communication interface configured to communicate with another device or a communication network.

Additionally, an embodiment of the disclosure provides a computer storage medium, for storing computer software instructions used by the electronic device, the computer storage medium comprising a program for performing the interaction method in the aforementioned first aspect.

In a fourth aspect, an embodiment of the disclosure provides an interaction method, applied to a client, the method comprising: receiving emotion information sent by a robot of a user, wherein the emotion information reflects an emotion of the user when the user is watching live streaming content corresponding to the host; and sending to the robot interactive content triggered by the host according to the emotion information.

In a fifth aspect, an embodiment of the disclosure provides an interaction apparatus, applied to a client, the apparatus comprising: a receiving module, configured to receive emotion information sent by a robot of a user, wherein the emotion information reflects an emotion of the user when the user is watching live streaming content corresponding to the host; and a sending module, configured to send to the robot interactive content triggered by the host according to the emotion information.

In a sixth aspect, an embodiment of the disclosure provides an electronic device, and the electronic device may be implemented as a user terminal device, such as a smart phone, comprising a processor and a memory, wherein the memory is configured to store a program supporting execution of the interaction method in the aforementioned fourth aspect by the electronic device, and the processor is configured to execute the program stored in the memory. The electronic device may further comprise a communication interface configured to communicate with another device or a communication network.

Additionally, an embodiment of the disclosure provides a computer storage medium, for storing computer software instructions used by the electronic device, the computer storage medium comprising a program for performing the interaction method in the aforementioned fourth aspect.

The interaction method and device provided in the embodiments of the disclosure provide the required content to a user by live streaming. Specifically, the user may select live streaming content to be watched from a player client interface of a robot, to trigger the robot to obtain and play the live streaming content. Additionally, when the user is watching the live streaming content, emotion information of the user during watching is captured, to send the emotion information of the user to a corresponding host so that the host triggers corresponding interactive content according to the emotion information of the user. For example, when it is found that the user expresses an emotion of boredom, the live streaming content is adjusted to sing a song, do a dance, or play a game. Through this solution, live streaming content is provided to a user by live streaming, and an emotion of the user when the user is watching the live streaming content is perceived to interact with the user, to combine a live streaming technology with a perception technology, and according to the watching emotion of the user, adjust the content watched by the user without delay, thereby achieving effective interaction between a content provider and a content viewer.

### BRIEF DESCRIPTION OF THE DRAWINGS

To illustrate the technical solutions in the embodiments of the disclosure more clearly, the drawings used in the description of the embodiments are introduced briefly. The drawings in the following description are some embodiments of the disclosure. For those of ordinary skill in the art, other drawings can be obtained according to these drawings without any creative efforts.
FIG. 1A is a flow diagram illustrating an interaction method according to some embodiments of the disclosure.
FIG. 1B is a diagram of an interaction process according to some embodiments of the disclosure.
FIG. 2A is a flow diagram illustrating an interaction method according to some embodiments of the disclosure.
FIG. 2b is a diagram of an interaction process according to some embodiments of the disclosure.
FIG. 3A is a flow diagram illustrating an interaction method according to some embodiments of the disclosure.
FIG. 3B is a diagram of an interaction process according to some embodiments of the disclosure.
FIG. 3C is a diagram of an interaction process according to some embodiments of the disclosure.
FIG. 3D is a diagram of an interaction process according to some embodiments of the disclosure.
FIG. 3E is a diagram of an interaction process according to some embodiments of the disclosure.
FIG. 4 is a block diagram of an interaction apparatus according to some embodiments of the disclosure.
FIG. 5 is a block diagram of an electronic device according to some embodiments of the disclosure.
FIG. 6 is a flow diagram illustrating an interaction method according to some embodiments of the disclosure.
FIG. 7 is a block diagram of an interaction apparatus according to some embodiments of the disclosure.
FIG. 8 is a block diagram of an electronic device according to some embodiments of the disclosure.
FIG. 9 is an interaction flow diagram illustrating an interaction method according to some embodiments of the disclosure.

### DETAILED DESCRIPTION

To make the objectives, technical solutions, and advantages of the embodiments of the disclosure clearer, the technical solutions in the embodiments of the disclosure are clearly and fully described below, referencing the accompanying drawings in the embodiments of the disclosure. The described embodiments are a part, rather than all, of the embodiments of the disclosure. All other embodiments obtained by those of ordinary skill in the art based on the embodiments in the disclosure without any creative efforts fall within the scope of the disclosure.

The terms used in the embodiments of the disclosure are to describe specific embodiments only and are not intended to limit the disclosure. The singular forms "a," "an," and "the" used in the embodiments of the disclosure and the appended claims are also intended to include plural forms unless the context indicates otherwise; "a plurality of' generally implies at least two, not excluding the case of including at least one.

The term "and/or" used herein is merely an association relationship describing associated objects, indicating that three relationships may exist. For example, A and/or B may indicate the presence of A alone, the presence of both A and B, and the presence of B alone. Additionally, the character "/" generally indicates that associated objects before and after the "/" have an "or" relationship.

Although elements may be described using terms such as first, second, and third in the embodiments of the disclosure, such element should not be limited to these terms. These terms are used only to distinguish between elements. For example, a "first element" may also be referred to as a "second element," and similarly, a "second element" may also be referred to as a "first element" without departing from the scope of the embodiments of the disclosure.

Depending on the context, the word "if' as used herein may be interpreted as "when ..." or "upon ..." or "in response to determining" or "in response to detecting." Similarly, depending on the context, the phrase "if it is determined" or "if it is detected" (a condition or event stated) may be interpreted as "when it is determined" or "in response to determining" or "when it is detected (the condition or event stated)" or "in response to detecting (the condition or event stated)."

The terms "include," "comprise," or any other variation thereof is intended to encompass a non-exclusive inclusion, so that a commodity or system that includes a series of elements includes not only those elements but also other elements not explicitly listed, or elements that are inherent to such a commodity or system. The element defined by the statement "including one ...," without further limitation, does not preclude the presence of additional identical elements in the commodity or system that includes the element.

Additionally, the order of steps in the following method embodiments are merely examples, not strict definitions of the ordering of steps.

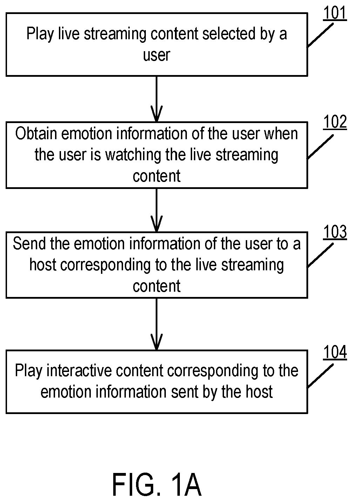

FIG. 1A is a flow diagram illustrating an interaction method according to some embodiments of the disclosure. The interaction method provided in this embodiment may be performed by an interaction apparatus. The interaction apparatus may be implemented as software or implemented as a combination of software and hardware. The interaction apparatus may be disposed in a robot. As shown in FIG. 1A, the method includes the following steps.

Step 101: play live streaming content selected by a user.

The user may be a user who uses a robot, such as a child user who uses a children's robot.

In one embodiment, the user may obtain content to be watched via live streaming. Specifically, a player client is installed in the robot of the user (e.g., a video player client). After the user starts the player client, a live streaming content list selectable by the user may be displayed in a player client interface, and the user selects live streaming content to be watched for playing from the content list.

In some embodiments, a corresponding host provides the live streaming content selected by the user for watching, and a host client uploads the live streaming content to a live streaming service platform on the network side. In this manner, the player client can pull, from the live streaming service platform, the live streaming content selected by the user for playing.

In practical applications, corresponding to the child user, the live streaming content may be a provided education or entertainment resource watchable by the child user.

Step 102: obtain emotion information of the user when the user is watching the live streaming content.

Step 103: send the emotion information of the user to a host corresponding to the live streaming content.

Step 104: play interactive content corresponding to the emotion information sent by the host.

In some embodiments, a plurality of types of acquisition apparatuses (e.g., a camera and a microphone array), are installed on the robot of the user, to acquire behaviors of the user when the user is watching the live streaming content and then analyze the acquired behaviors to obtain emotion information of the user when the user is watching the live streaming content. Then, according to the emotion information of the watching user, the host can adjust the live streaming content without delay, to trigger appropriate interactive content for interaction with the user, thereby improving watching enthusiasm of the user.

Generally, the behaviors triggered when the user is watching the live streaming content often include showing an expression, producing language, and performing actions. Thus, the current emotion status of the user may be recognized by analyzing the facial expression of the user and recognizing the speech of the user.

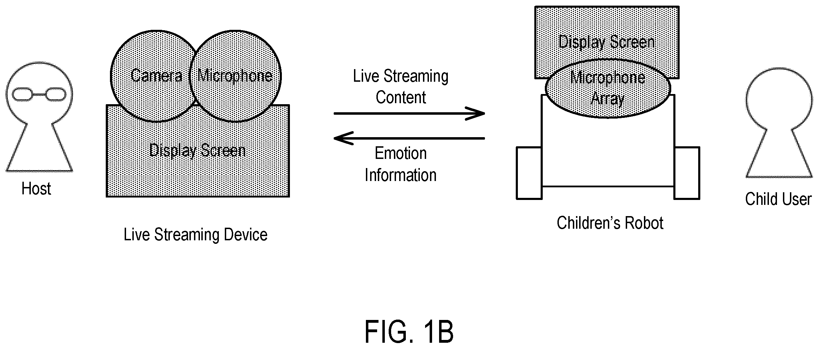

Thus, in some embodiments, the emotion information of the user when the user is watching the live streaming content may be obtained by acquiring an image of the user and performing expression recognition on the acquired image of the user to obtain an expression reflecting an emotion of the user; and/or acquiring voice of the user and performing voice recognition on the acquired voice of the user to obtain a statement reflecting an emotion of the user, as shown in FIG. 1B.

The process of expression recognition may be implemented using existing relevant technology; thus, details will not be described herein. The result of expression recognition may include expressions such as happiness, anger, disgust, and sadness.

A statement library reflecting different emotions may be pre-built. That is, the statement library may store common statement sets respectively corresponding to a variety of emotions. The acquired voice of the user is recognized to obtain the statement of the user, then matching is performed in various common statement sets to determine whether any common statement corresponding to the recognized statement exists. If a corresponding common statement is found by matching, then it is determined that the recognized statement is a statement reflecting an emotion of the user. Thus, in some embodiments, the recognized statement may be directly fed back to the host as an expression of the emotion of the user. In some embodiments, an emotion corresponding to the recognized statement, namely, an emotion corresponding to the common statement matching the recognized statement, may also be fed back to the host.

The matching between the recognized statement and a common statement does not require exact consistency; the recognized statement and a common statement that are semantically similar to each other may be sufficient.

After the host receives the emotion information of the user, the host may be instructed to trigger corresponding interactive content according to the emotion of the user, to arouse the watching and interaction enthusiasm of the user. For example, when the user expresses boredom, the live streaming content can be adjusted to the following interactive content: singing a song, doing a dance, or playing a game.

Given the above, as compared with the conventional manner in which a robot obtains content required by a user via downloading, in the disclosed embodiments, a robot can provide required content to a user via live streaming. In a live streaming mode, emotion information of a user when the user is watching live streaming content is captured and fed back to a host so that according to the emotion information of the user, the host triggers corresponding interactive content without delay, thereby achieving effective interaction between a content provider and a content viewer, and improving user viewing experience.

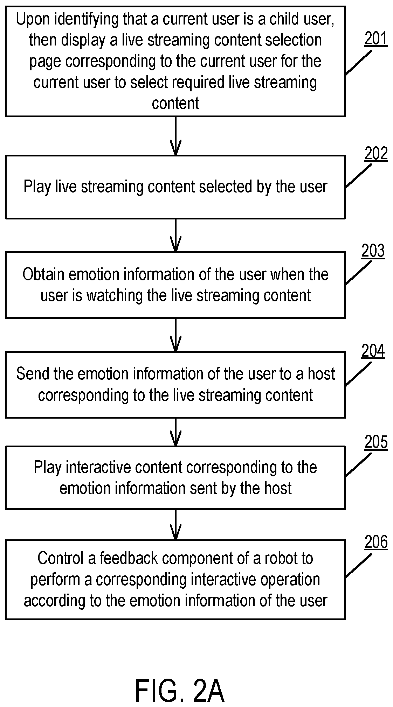

FIG. 2A is a flow diagram illustrating an interaction method according to some embodiments of the disclosure. As shown in FIG. 2A, the method includes the following steps.

Step 201: upon identifying that a current user is a child user, then display a live streaming content selection page corresponding to the current user for the current user to select required live streaming content.

The interaction method provided in this embodiment of the disclosure is especially suitable for scenarios in which child users use robots for learning and entertainment. As compared with adult users, child users may find concentrating difficult. To attract child users for better use of robots designed for learning purposes, a perception technology and live streaming technology are combined to implement interactive playing of content such as education and entertainment in children's robots.

Thus, in some embodiments, different content resource obtaining modes may be provided for different types of users using the robot. For example, if the user currently using the robot is an adult, then the conventional content obtaining mode may be adopted. That is, in response to a selection or search operation on a required content resource performed by the adult user, the existing content resource is downloaded from a corresponding server. However, if the user currently using the robot is a child, then a player client for live streaming may be started to display a live streaming content list for the child user to select live streaming content so that after the child user selects live streaming content to be watched, the live streaming content is pulled from a live streaming service platform for playing.

Therefore, first, the robot needs to identify whether the current user is a child user, and if the current user is a child user, then the robot provides, by live streaming, live streaming content to the user for watching.

In one embodiment, a method for identifying whether the current user is a child user is to determine according to the registration information of the user. Specifically, a robot may only be used by family members. That is, only a certain number of users can have access to the robot. Accordingly, when the robot is initially used, identity registration of the users capable of using the robot may be performed in a configuration interface. User types of different users may be set in the identity registration process and user images may be added, where the user types may be classified into adults and children using, as one example, image recognition software such as a neural network or other machine learning model. In this way, during identification of whether the current user is a child user, a user image is acquired; matching is performed between the acquired user image and the images of the registered users; and if a matching user image exists, then a user type of the current user is determined according to a user type corresponding to the matching user image.

Additionally, in some embodiments, feature extraction may be performed on the acquired user image of the current user to determine a user type according to extracted user features. The extracted user features include, for example, height and facial wrinkles.

Step 202: play the live streaming content selected by the user.

Step 203: obtain emotion information of the user when the user is watching the live streaming content.

Step 204: send the emotion information of the user to a host corresponding to the live streaming content.

Step 205: play interactive content corresponding to the emotion information sent by the host.

In the illustrated embodiment, steps 202, 203, 204, and 205 correspond to steps 101, 102, 103, and 104 of FIG. 1A. Reference may be made to the description of FIG. 1A for the specific implementation of these steps.

Step 206: control a feedback component of a robot to perform a corresponding interactive operation according to the emotion information of the user.

In this embodiment, to further enhance the interaction effect of the robot and enrich the interaction forms of the robot, the emotion information of the user may be fed back to the host so that the host triggers corresponding interactive content to arouse the enthusiasm of the user; also, a relevant feedback component on the robot may also be controlled to perform a corresponding interactive operation according to the emotion information of the user.

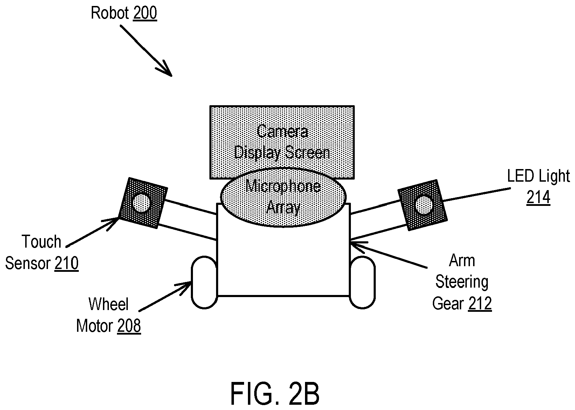

As illustrated in FIG. 2B, the feedback components on the robot (200) may include, for example, a touch sensor (210), an arm steering gear (212), a wheel motor (208), and an LED light (214).

For example, when the robot (200) finds that the child user is sleepy or bored, as shown in FIG. 2B, a wheel motor (208) may be automatically controlled to vibrate front and back with a small amplitude. Meanwhile, the arm steering gear (212) starts operating, and the LED light (214) starts flashing, thereby shifting the attention of the child to the live streaming content of the host.

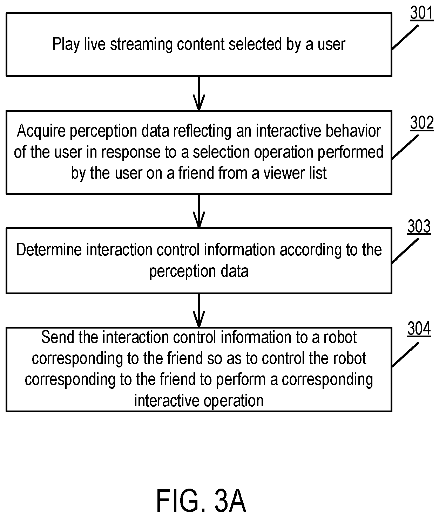

FIG. 3A is a flow diagram illustrating an interaction method according to some embodiments of the disclosure. As shown in FIG. 3A, the method includes the following steps.

Step 301: play live streaming content selected by a user.

Step 302: acquire perception data reflecting an interactive behavior of the user in response to a selection operation performed by the user on a friend from a viewer list.

Step 303: determine interaction control information according to the perception data.

Step 304: send the interaction control information to a robot corresponding to the friend to control the robot corresponding to the friend to perform a corresponding interactive operation.

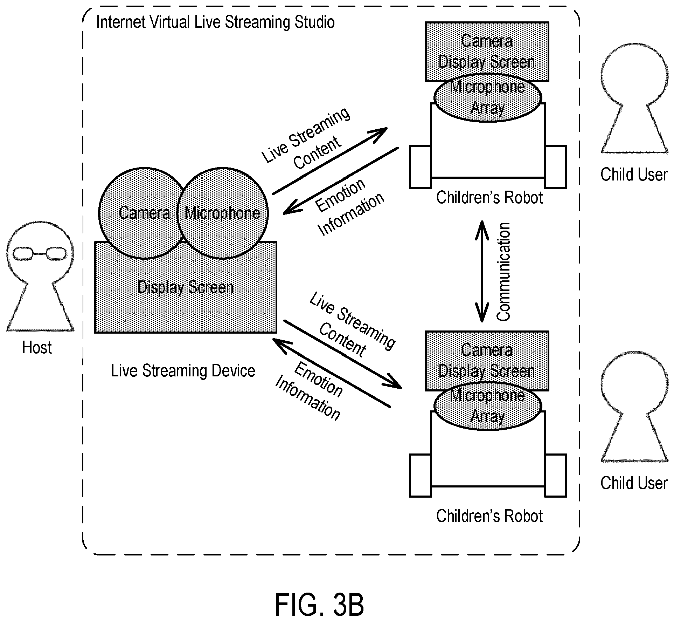

As shown in FIG. 3B, the same live streaming content live-streamed by the same host may be watched by different child users. Thus, different child users watching the same live streaming content may interact with the host, and the different child users may also interact and communicate with each other through respective robots thereof.

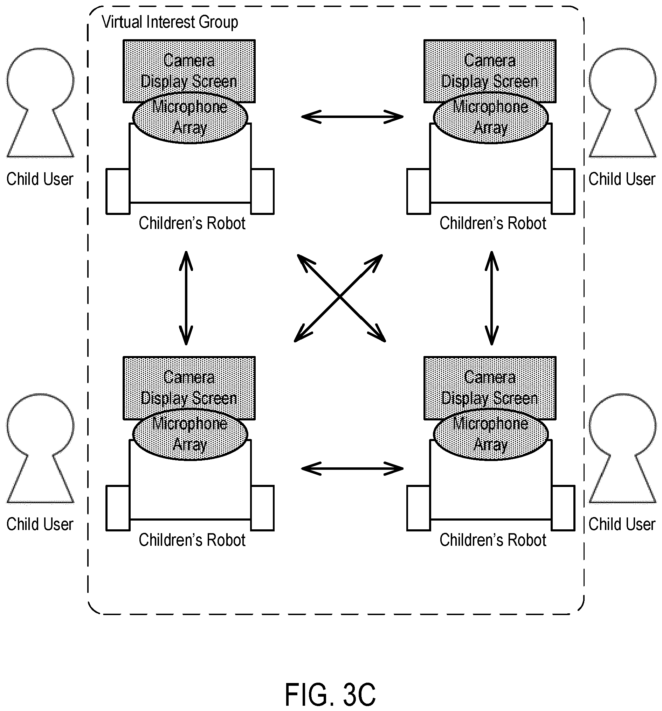

In some embodiments, as shown in FIG. 3C, a user having a robot may create a virtual interest group, and add friends watching the same live streaming content from the viewer list to the virtual interest group so that interaction and communication can be performed between users in the group. The interaction and communication may be in the following form: creating a chat window while creating the virtual interest group so that the users in the group can communicate using text, voice, images, or videos through the chat window.

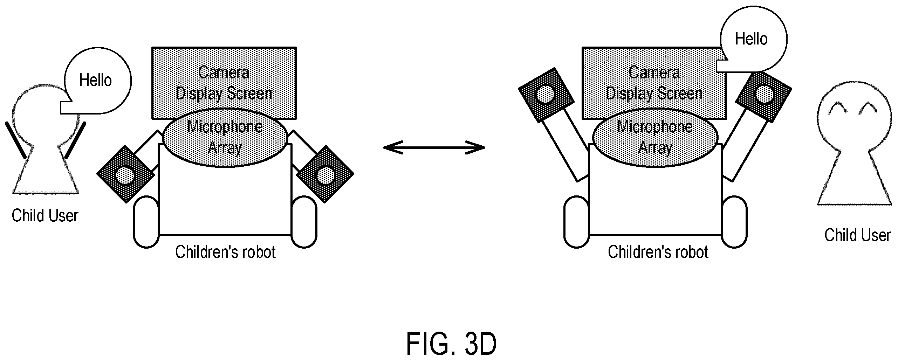

Additionally, in some embodiments, interaction may also be implemented through a robot, in addition to performing interaction and communication through a chat window. For example, when a user selects a friend from a viewer list to trigger establishment of a communication link with the friend, the user performs an interactive behavior on a robot thereof, for example, performs some actions or says something before the robot thereof, and the interactive behavior is shown on a robot of the friend. As shown in FIG. 3D, a user says "Hello" before a robot thereof and raises arms; then, a robot of a friend outputs voice "Hello" and raises arms of the robot.

To achieve the above-described interactive function, specifically, when a user selects a friend to communicate with and establishes a communication link with the friend, perception data reflecting an interactive behavior of the user may be acquired, and then the perception data is analyzed to determine interaction control information capable of controlling a robot of the friend to imitate the interactive behavior of the user, to send the obtained interaction control information to the robot of the friend to control the robot of the friend to perform a corresponding interactive operation.

The perception data reflecting the interactive behavior of the user may include at least one of the following: a depth image, a color image, interactive voice, and touch sensing information. The depth image may reflect body movements of the user, for example, the process of raising an arm. The color image may reflect the facial expression features of the user, for example, a smile. The interactive voice may reflect the voice of the user, for example, hello. The touch sensing information may reflect a touch operation of the user trigged for the robot, for example, holding the hand of the robot.

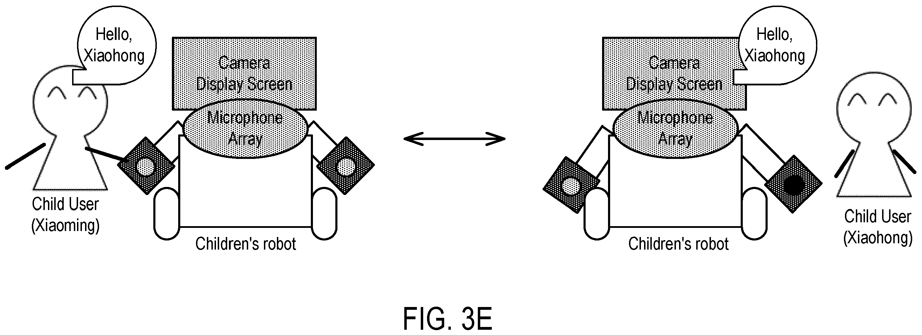

In some embodiments, when the perception data includes interactive voice, the interactive voice may be directly used as part of the interaction control information, which is equivalent to passing the interactive voice of the user through to the robot of the friend for playing. For example, in FIG. 3E, the words "Hello, Xiaohong" of a user Xiaoming will be played through a robot of the friend Xiaohong.

In some embodiments, when the perception data includes touch sensing information, light control information corresponding to the touch sensing information may be determined. The light control information is used as part of the interaction control information for controlling the display effect of an LED light in the robot of the friend. In some embodiments, a correspondence between different touch positions and display effects of different LED lights may be preset, so that after it is detected that the user touches a position on the robot body, an LED light used as a controlled object and a display mode of the LED light are determined based on the correspondence. The light control information includes the LED light used as the controlled object and the display mode of the LED light. For example, as shown in FIG. 3E, when the user Xiaoming touches the right hand of a robot thereof, an LED light on the left hand of the robot of the friend Xiaohong may be controlled to be turned on, to reduce the distance of remote interaction.

In some embodiments, when the perception data includes a color image, facial expression recognition may be performed on the color image to determine an expression object corresponding to a recognized facial expression from a preset expression library. The expression object is used as part of the interaction control information for controlling the robot of the friend to display the expression object. The process of facial expression recognition may be implemented using existing relevant technology and details are not be described herein again. The result of expression recognition may include expressions such as happiness, anger, surprise, fear, disgust, and sadness. Accordingly, an expression library including expression objects corresponding to various expression recognition results may be pre-built, where the expression object may be an expression animation or an expression image.

In some embodiments, when the perception data includes a depth image, bone recognition may be performed on the depth image to obtain joint pose information of the user, thereby determining robot joint pose information corresponding to the joint pose information of the user. Then, the determined robot joint pose information is used as part of the interaction control information for controlling the robot of the friend to perform a corresponding movement, as shown in FIG. 3D.

The method of bone recognition may be implemented using existing relevant technology; thus, details will not be described again. This embodiment only emphasizes that the result of bone recognition, namely, human joint pose information, is constituted by a motion sequence of a plurality of joints of the human body and reflects a motion trajectory of the plurality of joints. Additionally, because joints of a robot and joints of a human body may not be in one-to-one correspondence, which relates to the degree of human simulation of the robot, the process of mapping human joint pose information to robot joint pose information may involve both the mapping of joints and the mapping of joint poses. Therefore, a mapping relationship between human joints and robot joints is pre-established to determine a mapping relationship between human joint poses and robot joint poses.

As a simple example, assuming that for the movement of raising the right hand, human joint pose information is described relative to a reference line in a human coordinate system, and angles of the following joints relative to the reference line at different time points are respectively:
joint 1: 30 degrees, 40 degrees, 50 degrees ···;
joint 2: 20 degrees, 30 degrees, 40 degrees ···;
joint 3: 40 degrees, 50 degrees, 60 degrees ···;
joint 4: 40 degrees, 50 degrees, 60 degrees ···.

Moreover, robot joint pose information is described relative to a reference line in a robot coordinate system, and angles of the following joints corresponding to the human joints relative to the reference line at different time points are respectively:
joint a: 10 degrees, 40 degrees, 54 degrees ···;
joint b: 10 degrees, 23 degrees, 52 degrees ···.

In this embodiment, a user watching live streaming content can interact with a host, and can also interact with a friend through a robot thereof and a robot of the friend, thereby improving the interaction experience of the user and enriching the interaction forms of the robot.

Interaction apparatuses according to one or a plurality of embodiments of the disclosure are described in detail below. Those skilled in the art can understand that the interaction apparatuses can be constituted by configuring commercially available hardware components through steps instructed in this solution.

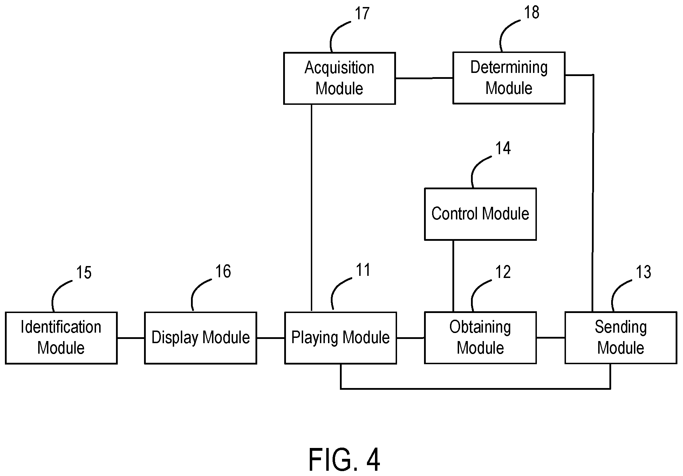

FIG. 4 is a block diagram of an interaction apparatus according to some embodiments of the disclosure. As shown in FIG. 4, the apparatus includes a playing module 11, an obtaining module 12, and a sending module 13.

The playing module 11 is configured to play live streaming content selected by a user.

The obtaining module 12 is configured to obtain emotion information of the user when the user is watching the live streaming content.

The sending module 13 is configured to send the emotion information to a host corresponding to the live streaming content.

The playing module 11 is further configured to play interactive content corresponding to the emotion information sent by the host.

In some embodiments, the obtaining module 12 is specifically configured to perform expression recognition on an acquired image of the user to obtain an expression reflecting an emotion of the user; and/or perform voice recognition on an acquired voice of the user to obtain a statement reflecting an emotion of the user.

In some embodiments, the apparatus further includes a control module 14.

The control module 14 is configured to control a feedback component of the robot to perform a corresponding interactive operation according to the emotion information.

In some embodiments, the apparatus further includes an identification module 15 and a display module 16.

The identification module 15 is configured to identify whether the user is a child user.

The display module 16 is configured to, if the identification module 15 identifies that the user is a child user, display a live streaming content selection page corresponding to the child user for the child user to select the live streaming content.

In some embodiments, the apparatus further includes an acquisition module 17 and a determining module 18.

The acquisition module 17 is configured to acquire perception data reflecting an interactive behavior of the user in response to a selection operation performed by the user on a friend from a viewer list.

The determining module 18 is configured to determine interaction control information according to the perception data.

The sending module 13 is further configured to send the interaction control information to a robot corresponding to the friend to control the robot corresponding to the friend to perform a corresponding interactive operation.

In some embodiments, the perception data includes a color image, and the determining module 18 is specifically configured to: perform facial expression recognition on the color image; and determine an expression object corresponding to a recognized facial expression from a preset expression library, where the interaction control information includes the expression object.

In some embodiments, the perception data includes a depth image, and the determining module 18 is specifically configured to perform bone recognition on the depth image to obtain joint pose information of the user; and determine robot joint pose information corresponding to the joint pose information of the user, where the interaction control information includes the robot joint pose information.

In some embodiments, the perception data includes touch sensing information, and the determining module 18 is specifically configured to determine light control information corresponding to the touch sensing information, where the interaction control information includes the light control information.

In some embodiments, the perception data includes interactive voice, and the interaction control information includes the interactive voice.

The apparatus shown in FIG. 4 can perform the methods in the embodiments shown in FIG. 1A, FIG. 2A, and FIG. 3A. Reference may be made to the relevant description of the embodiments shown in FIG. 1A, FIG. 2A, and FIG. 3A for additional details regarding the illustrated embodiment. Reference may be made to the description of the embodiments shown in FIG. 1A, FIG. 2A, and FIG. 3A for the execution process and technical effects of the technical solution, thus details will not be described herein again.

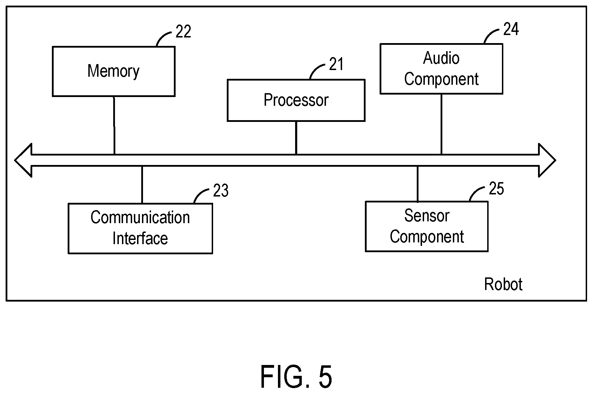

The internal function and structure of the robot interaction apparatus are described above. In a possible design, the structure of the aforementioned interaction apparatus may be implemented as an electronic device, and the electronic device may be a robot. As shown in FIG. 5, the robot may include a processor 21 and a memory 22. The memory 22 is configured to store a program supporting the execution of the interaction methods provided in the embodiments shown in FIG. 1A, FIG. 2A, and FIG. 3A by the robot and the processor 21 is configured to execute the program stored in the memory 22.

The program includes one or a plurality of computer instructions, and the one or plurality of computer instructions, when executed by the processor 21, can implement the following steps: playing live streaming content selected by a user; obtaining emotion information of the user when the user is watching the live streaming content; sending the emotion information to a host corresponding to the live streaming content; and playing interactive content corresponding to the emotion information sent by the host.

In some embodiments, the processor 21 is further configured to perform all or some steps in the method steps shown in FIG. 1A, FIG. 2A, and FIG. 3A.

The structure of the robot may further include a communication interface 23 configured for the robot to communicate with another device or a communication network, for example, communication between the robot and a server.

Additionally, the robot may further include an audio component 24 and a sensor component 25.

The audio component 24 is configured to output and/or input audio signals. For example, the audio component 24 includes a microphone configured to receive an external audio signal when the robot is in an operating mode, such as a voice recognition mode. The received audio signal may be further stored in the memory 22 or sent via the communication interface 23. In some embodiments, the audio component 24 further includes a loudspeaker configured to output audio signals.

The sensor component 25 includes one or a plurality of sensors. For example, the sensor component 25 includes a display of the robot, and the sensor component 25 may further detect the presence or absence of contact between the user and the robot. The sensor component 25 may include an optical sensor, such as a complementary metal-oxide-semiconductor (CMOS) or charge-coupled device (CCD) image sensor for use in imaging applications. In some embodiments, the sensor component 25 may further include an acceleration sensor, a gyroscope sensor, a magnetic sensor, a pressure sensor, a temperature sensor, or the like.

Additionally, the robot provided in this embodiment of the disclosure has multiple degrees of freedom of motion flexibility.

Additionally, an embodiment of the disclosure provides a computer storage medium, for storing computer software instructions used by a robot, the computer storage medium including a program for performing the interaction methods in the embodiments shown in FIG. 1A, FIG. 2A, and FIG. 3A.

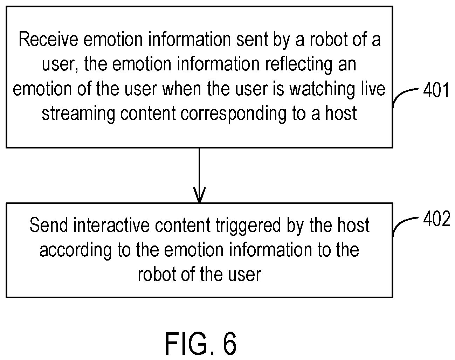

FIG. 6 is a flow diagram illustrating an interaction method according to some embodiments of the disclosure. The interaction method provided in this embodiment may be performed by an interaction apparatus. The interaction apparatus may be implemented as software or implemented as a combination of software and hardware. The interaction apparatus may be disposed in a host client. The host client may be installed in a user terminal device such as a smartphone, or may be installed in an intelligent robot. As shown in FIG. 6, the method may include the following steps.

Step 401: receive emotion information sent by a robot of a user, the emotion information reflecting an emotion of the user when the user is watching live streaming content corresponding to a host.

Step 402: send interactive content triggered by the host according to the emotion information to the robot of the user.

With reference to the previous method embodiments, a child user may watch live streaming content of a host through a children's robot, and the children's robot may acquire emotion information of the child user when the child user is watching the live streaming content, and feedback the obtained emotion information to the host so that the host triggers corresponding interactive content to implement interaction with the child user.

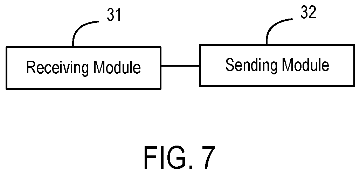

FIG. 7 is a block diagram of an interaction apparatus corresponding to the embodiment shown in FIG. 6. As shown in FIG. 7, the apparatus includes a receiving module 31 and a sending module 32.

The receiving module 31 is configured to receive emotion information sent by a robot of a user, where the emotion information reflects an emotion of the user when the user is watching live streaming content corresponding to a host.

The sending module 32 is configured to send to the robot interactive content triggered by the host according to the emotion information.

The apparatus illustrated in FIG. 7 can perform the method in the embodiment described in FIG. 6. Reference may be made to the relevant description of the embodiment shown in FIG. 6 for the undetailed part of this embodiment. Reference may be made to the description of the embodiment shown in FIG. 6 for the execution process and technical effects of the technical solution, thus details will not be described herein again.

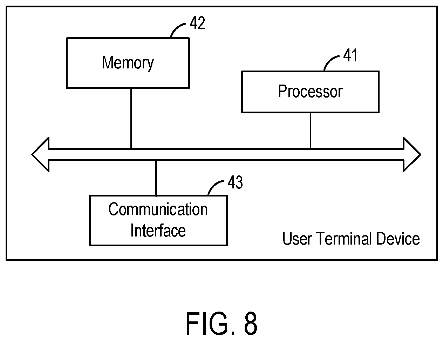

In a possible design, the structure of the interaction apparatus shown in FIG. 7 may be implemented as an electronic device, and the electronic device is a user terminal device such as a smartphone. As shown in FIG. 8, the user terminal device may include a processor 41 and a memory 42. The memory 42 is configured to store a program supporting the execution of the interaction method provided in the embodiment shown in FIG. 6 by the user terminal device, and the processor 41 is configured to execute the program stored in the memory 42.

The program includes one or a plurality of computer instructions, and the one or plurality of computer instructions, when executed by the processor 41, can implement the following steps: receiving emotion information sent by a robot of a user, where the emotion information reflects an emotion of the user when the user is watching live streaming content corresponding to a host; and sending to the robot interactive content triggered by the host according to the emotion information.

In some embodiments, the processor 41 is further configured to perform all or some steps in the method steps shown in FIG. 6.

The structure of the user terminal device may further include a communication interface 43 configured for the user terminal device to communicate with another device or a communication network.

Additionally, an embodiment of the disclosure provides a computer storage medium, for storing computer software instructions used by a user terminal device, the computer storage medium including a program for performing the interaction method in the method embodiment shown in FIG. 6.

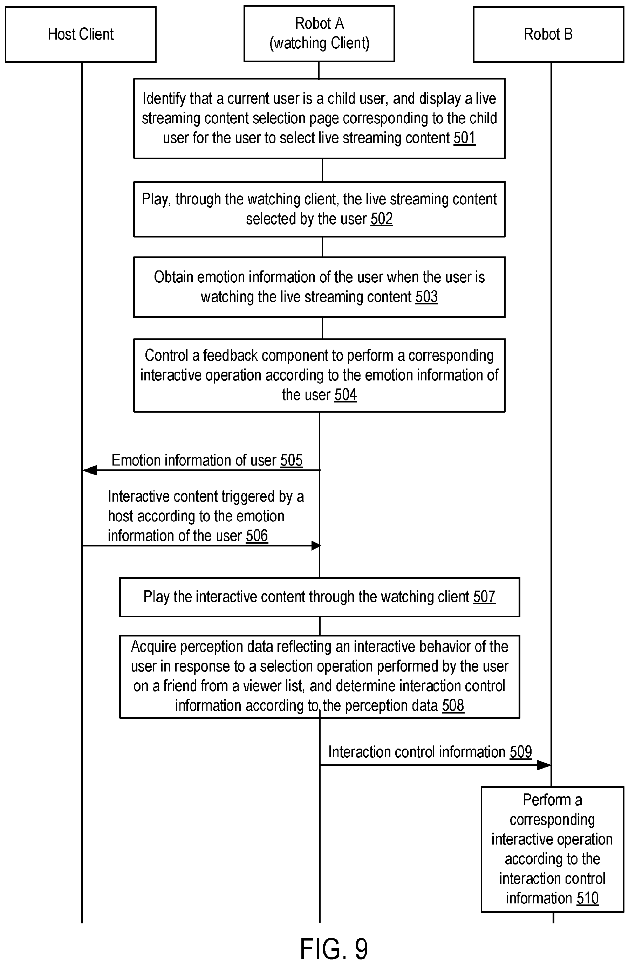

FIG. 9 is an interaction flow diagram illustrating an interaction method according to some embodiments of the disclosure. As shown in FIG. 9, the method may include the following steps.

Step 501: a robot A identifies that a current user is a child user and displays a live streaming content selection page corresponding to the child user for the user to select live streaming content.

Step 502: robot A plays, through a player client, the live streaming content selected by the user.

Step 503: robot A obtains emotion information of the user when the user is watching the live streaming content.

Step 504: robot A controls a feedback component to perform a corresponding interactive operation according to the emotion information of the user.

Step 505: robot A sends the emotion information of the user to a host client corresponding to the live streaming content.

Step 506: host client sends interactive content triggered by a host according to the emotion information of the user to the robot A.

Step 507: robot A plays the interactive content through the player client.

Step 508: robot A acquires perception data reflecting an interactive behavior of the user in response to a selection operation performed by the user on a friend from a viewer list, and determines interaction control information according to the perception data.

Step 509: robot A sends the interaction control information to a robot B corresponding to the friend.

Step 510: robot B performs a corresponding interactive operation according to the interaction control information.

The apparatus embodiments described above are merely illustrative, where the units described as separate components may or may not be physically separate, and the components displayed as units may or may not be physical units, that is, may be located at the same place, or may be distributed to a plurality of network units. The objective of the solution of this embodiment may be implemented by selecting some or all of the modules according to actual requirements. Those of ordinary skill in the art can understand and implement the disclosed embodiments without creative efforts.

Through the preceding description of the embodiments, those skilled in the art can clearly understand that the embodiments can be implemented by software plus a general hardware platform, and certainly can also be implemented by a combination of hardware and software. Based on such understanding, the essence of the technical solutions or the part that contributes to the prior art may be embodied in the form of a computer product. The disclosed embodiments may use the form of a computer program product implemented on one or a plurality of computer-usable storage media (including, but not limited to, a magnetic disk memory, a CD-ROM, an optical memory, and the like) containing computer-usable program code therein.

The disclosed embodiments are described with reference to flowcharts and/or block diagrams of a method, a device (system), and a computer program product according to the embodiments of the disclosure. It should be understood that each procedure and/or block in the flowcharts and/or block diagrams, and a combination of procedures and/or blocks in the flowcharts and/or block diagrams may be implemented with computer program instructions. These computer program instructions may be provided to a processor of a general-purpose computer, a special-purpose computer, an embedded processor, or any other programmable data processing device to produce a machine, so that instructions executed by the processor of the computer or other programmable data processing device generate means for implementing a specified function in one or a plurality of procedures in the flowcharts and/or one or a plurality of blocks in the block diagrams.

These computer program instructions may also be stored in a computer-readable memory that can direct a computer or any other programmable data processing device to operate in a particular manner, such that the instructions stored in the computer-readable memory produce an article of manufacture including instruction means, the instruction means implementing a specified function in one or a plurality of procedures in the flowcharts and/or one or a plurality of blocks in the block diagrams.

These computer program instructions may also be loaded onto a computer or any other programmable data processing device so that a series of operational steps are performed on the computer or other programmable devices to produce computer-implemented processing, and thus the instructions executed on the computer or other programmable device provide the steps for implementing a specified function in one or a plurality of procedures in the flowcharts and/or one or a plurality of blocks in the block diagrams.

In a typical configuration, the computing device includes one or a plurality of processors (CPUs), input/output interfaces, network interfaces, and memories.

The memory may include a computer-readable medium in the form of non-permanent memory, random access memory (RAM) and/or non-volatile memory or the like, such as read-only memory (ROM) or flash memory (flash RAM). The memory is an example of a computer-readable medium.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible by a computing device. In light of the definitions herein, the computer-readable medium does not include transitory computer-readable media (transitory media), such as modulated data signals and carriers.

It should be finally noted that the above embodiments are merely used for illustrating rather than limiting the technical solutions of the disclosure. Although the disclosure is described in detail with reference to the foregoing embodiments, those of ordinary skill in the art should understand that the technical solutions disclosed in the foregoing embodiments may still be modified or equivalent replacement may be made on part or all of the technical features therein. These modifications or replacements will not make the essence of the corresponding technical solutions be departed from the spirit and scope of the technical solutions in the embodiments of the disclosure.

## Claims

1. An interaction method, applied to a robot, the method comprising:
playing live streaming content selected by a user;
obtaining emotion information of the user when the user is watching the live streaming content;
sending the emotion information to a host corresponding to the live streaming content; and
playing interactive content corresponding to the emotion information sent by the host.

2. The method according to claim 1, wherein the obtaining emotion information of the user when the user is watching the live streaming content comprises:
performing expression recognition on an acquired image of the user to obtain an expression reflecting an emotion of the user; and/or
performing voice recognition on an acquired voice of the user to obtain a statement reflecting an emotion of the user.

3. The method according to claim 1, wherein the method further comprises:
controlling a feedback component of the robot to perform a corresponding interactive operation according to the emotion information.

4. The method according to any one of claims 1 to 3, wherein before the playing live streaming content selected by a user, the method further comprises:
identifying whether the user is a child user; and
if so, then displaying a live streaming content selection page corresponding to the child user for the child user to select the live streaming content.

5. The method according to any one of claims 1 to 3, wherein the method further comprises:
acquiring perception data reflecting an interactive behavior of the user in response to a selection operation performed by the user on a friend from a viewer list;
determining interaction control information according to the perception data; and
sending the interaction control information to a robot corresponding to the friend to control the robot corresponding to the friend to perform a corresponding interactive operation.

6. The method according to claim 5, wherein the perception data comprises a color image, and the determining interaction control information according to the interactive data comprises:
performing facial expression recognition on the color image; and
determining an expression object corresponding to a recognized facial expression from a preset expression library, wherein the interaction control information comprises the expression object.

7. The method according to claim 5, wherein the perception data comprises a depth image, and the determining interaction control information according to the interactive data comprises:
performing bone recognition on the depth image to obtain joint pose information of the user; and
determining robot joint pose information corresponding to the joint pose information of the user, wherein the interaction control information comprises the robot joint pose information.

8. The method according to claim 5, wherein the perception data comprises touch sensing information, and the determining interaction control information according to the interactive data comprises:
determining light control information corresponding to the touch sensing information, wherein the interaction control information comprises the light control information.

9. The method according to claim 5, wherein the perception data comprises interactive voice, and the interaction control information comprises the interactive voice.

10. An electronic device, comprising a memory and a processor, wherein
the memory is configured to store one or a plurality of computer instructions, wherein the one or plurality of computer instructions, when executed by the processor, implement the interaction method according to any one of claims 1 to 9.

11. An interaction method, applied to a host, the method comprising:
receiving emotion information sent by a robot of a user, wherein the emotion information reflects an emotion of the user when the user is watching live streaming content corresponding to the host; and
sending to the robot interactive content triggered by the host according to the emotion information.

12. An electronic device, comprising a memory and a processor, wherein
the memory is configured to store one or a plurality of computer instructions, wherein the one or plurality of computer instructions, when executed by the processor, implement the interaction method according to claim 11.
